# EUROPEAN PATENT APPLICATION

(11) **EP 1 755 015 A2**
(43) Date of publication of application: **21.02.2007**
(21) Application number: 06016912.5
(22) Date of filing: 14.08.2006
(51) Int. Cl.: G05D 16/20

(54) **Relief valve**

(30) Priority: 19.08.2005 US 207638
(71) Applicant: Eaton Corporation, Cleveland, Ohio 44114-2584 (US)
(72) Inventor: Kim, Tae-kyung, Rochester Hills, MI 48307 (US)
(74) Representative: Rüger, Barthelt & Abel Patentanwälte

(57) **Abstract**

A valve portion (14) for a solenoid valve is disclosed. The valve portion (14) includes a valve body (30) including a longitudinal channel (32), wherein the valve body (30) further includes a supply aperture (31c), a control aperture (31b) and an exhaust aperture (31a). A spool (36) is slidably disposed in said longitudinal channel (32) and the spool (36) is adapted to adjust a connection between said supply aperture (31c) and said control aperture (31b) upon external excitation. A pressure regulation device (40) is operatively connected or adjoined to the exhaust aperture (31a), the control aperture (3 1 b), and the supply aperture (31c), wherein the pressure regulation device (40) is adapted to adjustably connect or adjoin the exhaust aperture (31a) to at least one of the control aperture (31b) and the supply aperture (31c), such that spool position is generally maintained substantially independent of pressure variation between the control aperture (31b) and the supply aperture (31c).

## Description

### BACKGROUND OF THE INVENTION

### Field of the Invention

The present invention relates to a relief valve, such as a relief valve for a use in connection with a solenoid.

### Description of the Related Art

Spool valve solenoids are known and used in a variety of applications. Among other examples, a spool valve may statically or dynamically control pressure in an environment such as, for example, in connection with an engine valve. The use of a conventional spool valve solenoid as a pressure regulator is known. Typically, spool valves control pressure using at least one magnetic element that, upon excitation, activates a rod and a spool connected thereto to controllably change pressure of a fluid or the like residing in the spool valve. Generally, the spool is slidably disposed in a longitudinal bore defined in a valve body. The movement of the rod and spool provide a mechanism to generally control pressure or movement of a medium passing through portions of the valve body.

A conventional spool valve arrangement, among other things, can provide a spool that is slidably disposed about a rod such that, as a magnetic element is turned off, the spool may longitudinally slide and generate movement of the rod and armature. This design generally provides a means for controlling the pressure of a medium passing through the valve body independent of an associated magnet. However, this can also lead to a variable air-gap between the armature and a lower portion of the solenoid housing, as the rod and armature position generally change as the pressure exerted upon the spool changes. The variability of the air-gap, therefore, may lead to a variable distance between the armature and a top portion of the solenoid housing. Such variability can also lead to a time variability to fully excite the armature and substantially open the valve body. For at least this reason, improved spool valve solenoids are desired.

### SUMMARY

A valve portion for a solenoid valve is disclosed. The valve portion includes a valve body including a longitudinal channel, wherein the valve body further includes a supply aperture, a control aperture and an exhaust aperture. A spool is slidably disposed in said longitudinal channel and the spool is adapted to adjust a connection between said supply aperture and said control aperture upon external excitation. A pressure regulation device is operatively connected or adjoined to the exhaust aperture, the control aperture, and the supply aperture, wherein the pressure regulation device is adapted to adjustably connect or adjoin the exhaust aperture to at least one of the control aperture and the supply aperture, such that spool position is generally maintained substantially independent of pressure variation of fluid between the control aperture and the supply aperture.

### BRIEF DESCRIPTION OF THE DRAWINGS

Embodiments of the invention will now be described, by way of example, with reference to the accompanying drawings, wherein:

FIG. 1 is a cross-section view of a valve according to an embodiment of the invention; and

FIG. 2 is a cross-section view of a valve according to an embodiment of the invention.

### DETAILED DESCRIPTION

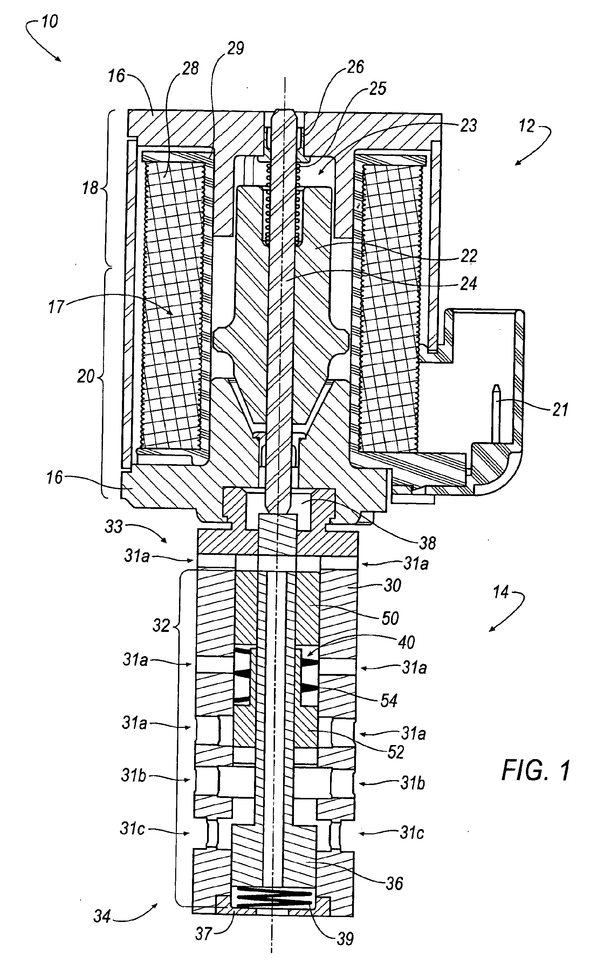

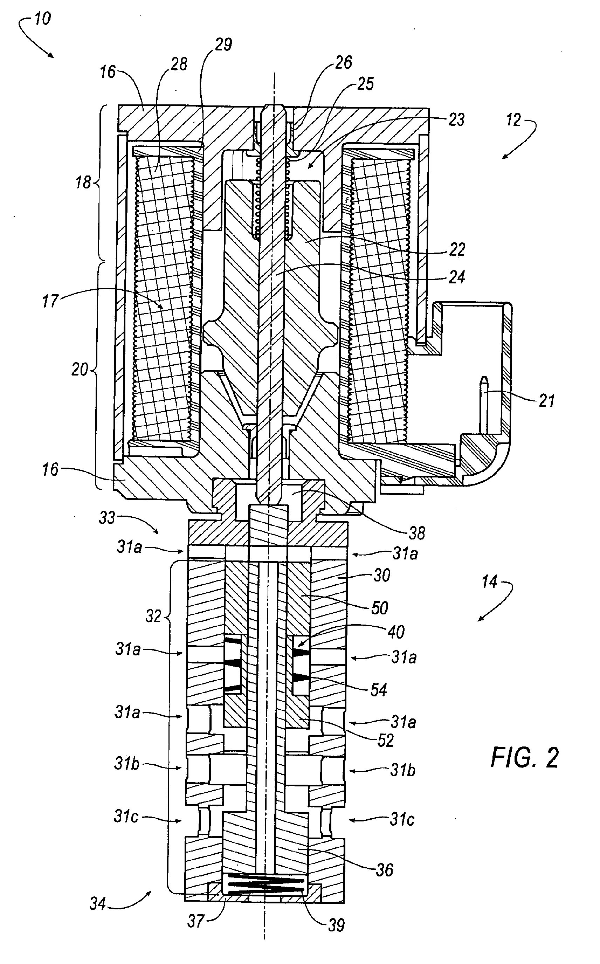

Figure 1 and Figure 2 illustrate an exemplary valve 10 in accordance with an embodiment of the invention. Valve 10 is illustrated in an open valve configuration and includes a first portion 12 and a second portion 14. For convenience, first portion 12 will be referred to as an actuation portion 12, and second portion 14 will be referred to as a valve portion 14, however, it will be readily apparent to one skilled in the art that other descriptive terms may also be used to define these portions.

Actuation portion 12 includes a case 16 and an actuator 17. Case 16 includes a top portion 18 and a bottom portion 20. In an embodiment at least a portion of case 16 is a flux collector. Case 16 generally surrounds actuator 17. It will be appreciated that, actuation portion 12, actuator 17 and case 16 may be designed in accordance with known arrangements and, thus, actuation portion 12, actuator 17 and case 16 will only be generally discussed herein. Alternatives to the illustrated arrangement will be recognized by one of ordinary skill in the art and, therefore, they may be used in combination with the present invention, and the present invention should not be limited to the actuation portion illustrated and described.

In an embodiment, actuator 17 includes a bobbin 28 having an electromagnetic coil 29 operatively wrapped therearound to provide a magnetic coil arrangement. Magnetic coil arrangements to operate solenoid valves are well understood by those skilled in this art and need not be described further herein. A terminal 21 may also be connected to the electromagnetic coil 29 and to ground to generate an electromagnetic force. In an embodiment, the terminal 21 is adapted to receive a signal provided from a control device (not shown). The control device may be internal to the solenoid or part of an external system (not shown).

Actuator 17 defines a longitudinal channel 23 at a central portion of bobbin 28. An armature 22 and a rod 24 may be slidably disposed in channel 23 as shown in the Figures. Armature 22 and rod 24 are operatively connected to one another such that movement of armature 22 also provides movement to rod 24 and vice-versa. In an embodiment, a biasing device 25 may also be included between armature 22 and top portion 18 of case 16. Biasing device 25 generally biases rod 24 and armature 22 toward valve portion 14. In an embodiment, an adjusting means 26, such as a screw or the like, may be connected to biasing device 25 to adjustably define a desired amount of force asserted by biasing device 25 between top portion 18 of case 16 and armature 22, or define a desired compression of biasing device 25. The benefits and uses of biasing device 25 are known. Among other examples, biasing device 25 may be a coil spring; however, one of ordinary skill will recognize that other biasing devices may also be used.

As illustrated in the Figures, valve portion 14 is typically arranged adjacent to actuation portion 12. In an embodiment, valve portion 14 includes a valve body 30 that defines a channel 32 longitudinally extending through a first end 33 and a second end 34 of valve body 30. First end 33 of valve portion 14 is connected to bottom portion 20 of case 16 of actuation portion 12. In an embodiment, at least a portion of channel 32 of valve portion 14 is operatively connected or juxtaposed to at least a portion of channel 23 of actuation portion 12 such that channel 32 of valve portion 14 and channel 23 of actuation portion 12 generally interact to form a continuous channel through valve 10.

The valve portion 14 includes a spool 36 slidably disposed in channel 32 of valve body 30 and adapts to slidably egress and ingress with respect to channel 23 of actuation portion 12. In an embodiment, a sealing means 38 may be disposed between rod 24 and spool 36 to seal fluid or the like from entering between case 16 and valve body 30 such that fluid resident in valve portion 14 is generally prohibited from entering actuation portion 12. In an embodiment, spool 36 and rod 24 are operatively connected through or about sealing means 38. One of skill in the art will readily recognize a wide variety of types of sealing means 38 may be employed to provide a desired seal between case 16 and valve body 30. For example, without limitation, sealing means 38 may comprise a diaphragm; however, other sealing means may be employed, such as, for example, an O-ring or the like.

The valve portion 14 may further include a plug 37 or cap disposed in or about second end 34 of valve body 30. It should be noted, that plug 37 may be a separate piece or may be integrally formed with valve body 30. Plug 37 may include an aperture for fluid to enter therein; however, plug 37 may also prohibit fluid from entering into valve body 20. One of ordinary skill in the art will recognize other alternatives to employing a plug, such as, for example, providing an internal reservoir. Further, second end 34 may be open and allow fluid or the like to enter into valve body 30. With reference to the Figures, a spool-biasing device 39 may be disposed between plug 37 and spool 36. In an embodiment, spool-biasing device 39 generally urges spool 36 toward rod 24. In an embodiment, an adjusting means (not shown) such as a screw or the like, may be connected to spool biasing device 39 to adjustably define a desired amount of force asserted by spool-biasing device 39 between spool 36 and plug 39, or define a desired compression of spool-biasing device 39. The benefits and uses of spool-biasing device 39 are known. Among other examples, spool-biasing device 39 may comprise a coil spring; however, one of ordinary skill will recognize that other spool-biasing devices may also be used.

Case 16 and the actuator 17 are operatively attached to valve portion 14. Case 16 and valve portion 14 are attached using known attachment means. Among other known arrangements, for example, case 16 may be crimped around a portion of valve portion 14. One of ordinary skill in the art will recognize various other possible arrangements, for example, case 16 may be heat-formed or heat-staked to valve portion 14 or threadably connected thereto.

In the illustrated exemplary embodiment, valve body 30 includes at least three apertures 31 at various points along body 30, including a first aperture 31a, second aperture 31b, and third aperture 31c. In the illustrated embodiment, first aperture 31a provides an exhaust path, second aperture 31b provides a control path, and third aperture 31c provides a supply path. It will be appreciated that various placements, numbers of, or path configurations associated with the apertures are contemplated by the invention, and the invention should not be limited to the specific design illustrated and described. For example, one of ordinary skill in the art may employ a number of other operational arrangements based on various design specifications and/or requirements.

In a typical arrangement, valve 10 is generally arranged to control hydraulic fluid pressure between exhaust path 31 a, control path 31 b and supply path 31 c. Valve portion 14 is configured to adjustably define the hydraulic fluid pressure such that the hydraulic flow and, therefore, the amount of hydraulic fluid provided from valve 10 via control path 31b may be regulated or controlled.

With continued reference to the Figures, an embodiment is shown having six exhaust paths 31a, two control paths 31 b, and two supply paths 31c. It will be appreciated that an open valve 10 configuration, such as generally illustrated in Figure 2, may be in a coil de-energized condition wherein a biasing device 25 biases or urges armature 22 and rod 24 downwardly until rod 24 has its lower end seated on sealing means 38 generally closing the exhaust apertures 31a from the control apertures 31b and the supply apertures 36c. The length of spool 36 may be configured such that as rod 24 is seated on or about sealing means 38, the spool 36 is positioned so as to partially open supply aperture 31 c to control aperture 31b. Thus, in a de-energized condition, an open valve (e.g., as shown in Figure 1) can provide a reduced pressure flow to control aperture 31b.

In an embodiment, spool 36 includes a pressure regulation device 40. While valve 10 is in an inactive or de-energized state (i.e., actuation portion 12 is not actuated and rod 24 and armature 22 are generally closed) pressure regulation device 40 generally prevents spool 36 from pressing upon or against rod 24 operatively connected thereto. In a conventional arrangement, this pressure would typically urge armature 24 and rod 22 into a semi-active position. For example, within valve body 30, the hydraulic fluid pressure of the fluid passing between control aperture 31 b and supply aperture 31c often varies due to external factors outside of valve 10, such as for example, an engine valve requiring different amounts of fluid or the like. Without limitation, the pressure may change due to a change in fluid heat, change in viscosity, or the like. As a result, a pressure variance may be exhibited in connection with spool valve 36. In other words, in a conventional valve arrangement, as fluid pressure increases in valve portion 14, pressure is subsequently exhibited upon spool valve 36 slidably residing within channel 32. Spool 36, therefore, is urged upward and subsequently impinges upon armature 22 and rod 24, slidably residing within channel 23 of actuator 17. This, then, urges at least a portion of armature 22 and rod 24 further upwards into channel 23 of actuator 17 and creates a variable air-gap between bottom portion 20 of case 16 and armature 22 that varies with the hydraulic pressure. As a result, the activation of valve 10 may take a variable amount of time, wherein the time variable is related to or contingent upon a position of rod 24 and the size of the air-gap between armature 22 and bottom portion 20 of case 16. In demanding environments, even a minimal time variation, such as the variation described, may lead to an unfavorable result. Thus, pressure regulation device 40, in accordance with the present invention, provides a mechanism to generally minimize, or eliminate, the variable air gap and generally provide a generally constant time-activation to open or close valve 10.

With reference to the illustrated embodiment, pressure regulation device 40 includes a shoulder portion 50, a relief portion 52 and a pressure relief biasing device 54 disposed therebetween. In an embodiment, shoulder portion 50 is attached along a portion of valve body 30 and provides a base for biasing device 54 and relief portion 52. Relief portion 52 is slidably disposed along channel 32 and operatively connects control path 31b with exhaust path 31 a. As the hydraulic pressure in valve body 20 increases along control path 31 b, increased pressure becomes exerted upon relief portion 52. As generally illustrated in Figure 2, as the pressure exerted upon relief portion traverses beyond or generally reaches a given pressure threshold (which may be prescribed or pre-defined), pressure relief biasing device 54 adapts to generally allow relief portion 52 to become longitudinally displaced (e.g., upwardly) towards shoulder portion 50 such that fluid may egress through exhaust path 31a and the pressure may generally remain constant along the control path 31b. As a result, spool 36 will generally not become longitudinally displaced and the air-gap as described hereinabove will generally remain constant unless the pressure becomes exaggerated beyond a certain level. One of ordinary skill in the art will readily recognize that pressure relief biasing device 54 may be designed to define a pressure threshold and an exaggerated pre-defmed level. In this regard, therefore, it will be appreciated that different lengths of shoulder portion 50, relief portion 52 may be used to provide a pressure relief biasing device suitable for particular design conditions. Similarly, one of ordinary skill will recognize that design considerations and the like will dictate the proper pressure threshold for pressure regulation device 50 and provide a pressure relief biasing device 54 utilizing a compression suitable for such a design.

Among other examples, pressure relief biasing device 54 may comprise a coil spring; however, one of ordinary skill will recognize that other types or arrangements of biasing devices may also be used.

With continued reference to the Figures, actuator 17 is, among other possibilities, electronically actuated through terminal 21. For example, valve 10 is responsive upon the receipt of a first signal sent via an external controller or the like when an increased fluid flow from valve 10 is desired. Conversely, an electrical signal indicating a decrease cause the solenoid spool valve 10 to decrease flow. Further, it should be noted that the present invention may be incorporated into a valve that draws armature toward top portion 16 upon activation of actuation portion 12, or vice versa. That is, the present invention should not be so limited thereby. Further, the present invention may be incorporated into other types of valves including, among others, bleed valves. These and other features will be appreciated by one of ordinary skill after considering the present disclosure.

The present invention has been particularly shown and described with reference to the foregoing embodiments, which are merely illustrative of the best modes for carrying out the invention. It should be understood by those skilled in the art that various alternatives to the embodiments of the invention described herein may be employed in practicing the invention without departing from the spirit and scope of the invention as defined in the following claims. It is intended that the following claims define the scope of the invention and that the method and apparatus within the scope of these claims and their equivalents be covered thereby. This description of the invention should be understood to include all novel and non-obvious combinations of elements described herein, and claims may be presented in this or a later application to any novel and non-obvious combination of these elements. Moreover, the foregoing embodiments are illustrative, and no single feature or element is essential to all possible combinations that may be claimed in this or a later application.

## Claims

1. A valve portion (14) comprising:
a valve body (30) defining a longitudinal channel (32), wherein said valve body (30) includes a supply aperture (31c), a control aperture (31b) and an exhaust aperture (31a) in communication with said longitudinal channel (32);
a spool (36) slidably disposed in said longitudinal channel (32), said spool (36) adapted to adjust the connection between said supply aperture (31c) and said control aperture (31b) upon external excitation; and
a pressure regulation device (40) operatively connected to said exhaust aperture (31a), said control aperture (31b), and said supply aperture (31c);
wherein said pressure regulation device (40) is adapted to adjustably connect said exhaust aperture (31a) to at least one of said control aperture (31b) and said supply aperture (31c), such that spool position is generally maintained substantially independent of pressure variation between said control aperture (31b) and said supply aperture (31c).

2. The valve portion (14) according to claim 1, wherein said pressure regulation device (40) includes a shoulder portion (50), a relief portion (52) and a biasing device (54) positioned therebetween.

3. The valve portion (14) according to claim 2, wherein said shoulder portion (50) is connected to said valve body (30).

4. The valve portion (14) according to claim 2, wherein said shoulder portion (50) is connected to said spool (36).

5. The valve portion (14) according to claim 2 wherein said relief portion (52) is slidably disposed in said valve body (30) and said shoulder portion (50) is connected to said valve body (30).

6. The valve portion (14) according to claim 2, wherein a compression of said biasing device (54) generally provides an adjustment of said regulation device (40).

7. The valve portion (14) according to claim 2, wherein in an inactive state, said spool (36) and said valve body (30) provide a pathway to said longitudinal channel (32) from said supply aperture (31c).

8. The valve portion (14) according to claim 2, wherein said biasing device (54) includes a coil spring.

9. A valve portion for a solenoid valve having an actuation portion (12) and a valve portion (14), the actuation portion (12) defining a first channel (23) having an armature (22) and a rod (24) slidably disposed therein and an air-gap between the armature (22) and a portion of the actuation portion (12), said valve portion (14) comprising:
a valve body (30) defining a second channel (32) generally juxtaposed with the first channel (23) of the actuation portion (12), said valve body (30) further defining a supply aperture (31c), a control aperture (31b) and an exhaust aperture (31a);
a spool (36) slidably disposed in said second channel (32), said spool (36) adapted to operatively connect to the actuation portion (12);
a pressure regulation device (40) in communication with said apertures (31a, 31b, 31c), said pressure regulation device (40) adapted to generally maintain a pressure between said supply aperture (31c) and said control aperture (31b) such that said pressure regulation device (40) adjustably connects said exhaust aperture (31a) to said control aperture (31 b) to generally maintain the air-gap between the armature (22) and the portion of the actuation portion (12) when the solenoid valve is de-activated.

10. The valve portion (14) according to claim 9, wherein said pressure regulation device (40) includes a shoulder portion (50), a relief portion (52) and a biasing device (54) positioned therebetween.

11. The valve portion (14) according to claim 10, wherein said shoulder portion (50) is connected to said valve body (30).

12. The valve portion (14) according to claim 10, wherein said shoulder portion (50) is connected to said spool (36).

13. The valve portion (14) according to claim 10 wherein said relief portion (52) is slidably disposed in said valve body (30) and said shoulder portion (50) is connected to said valve body (30).

14. The valve portion (14) according to claim 10, wherein a compression of said biasing device (54) provides an adjustment of said regulation device (40).

15. The valve portion (14) according to claim 10, where said biasing device (54) includes a coil spring.

16. A valve comprising:
an actuation portion (12) defining a first longitudinal channel (23), said actuation portion (12) having a rod (24) and an armature (22) operatively connected to an actuator (17), said rod (24) and armature (22) slidably disposed in said first longitudinal channel (23); and
a valve portion (14) having
a valve body (30) defining a second longitudinal channel (32) therein generally juxtaposed to said first channel (23) of said actuation portion (12), said valve body (30) includes at least one exhaust aperture (31a), at least one control aperture (31b), and at least one supply aperture (31c),
a spool (36) slidably disposed in said second longitudinal channel (32), said spool (36) operatively connected to said rod (24) of said actuation portion (12) and adapted to slide into said first channel (23) of said actuation portion (12), said spool (36) in communication with said apertures (31a-31c), and
a relief device in communication with at least two of said apertures (31a-31c), said relief device adapted to adjustably adjoin said at least one exhaust aperture (31a) to at least one of said other two of said apertures (31b, 31c) such that pressure therein is generally maintained without generally moving said spool (36).

17. The valve portion (14) according to claim 16, wherein said relief device includes a shoulder portion (50), a relief portion (52) and a biasing device (54) positioned therebetween.

18. The valve portion (14) according to claim 17, wherein said shoulder portion (50) is connected to a said valve body (30).

19. The valve portion (14) according to claim 17, wherein said shoulder portion (50) is connected to said spool (36).

20. The valve portion (14) according to claim 17 wherein said relief portion (52) is slidably disposed in said valve body (30) and said shoulder portion (50) is attached to said valve body (30).

21. The valve portion (14) according to claim 17, wherein a compression of said biasing device (54) generally defines an adjustability of said relief device.
